Europäisches Patentamt

European Patent Office

Office européen des brevets

(19)

(11) Veröffentlichungsnummer: **0 231 764 B1**

# (12) EUROPÄISCHE PATENTSCHRIFT

(45) Veröffentlichungstag der Patentschrift: **27.12.91**

(51) Int. Cl.5: **B30B 11/20**, B30B 15/28

(21) Anmeldenummer: **87100245.7**

(22) Anmeldetag: **10.01.87**

(54) **Würfelpresse.**

(30) Priorität: **24.01.86 CH 287/86**

(43) Veröffentlichungstag der Anmeldung:
**12.08.87 Patentblatt 87/33**

(45) Bekanntmachung des Hinweises auf die
Patenterteilung:
**27.12.91 Patentblatt 91/52**

(84) Benannte Vertragsstaaten:
**AT BE CH DE ES FR GB GR IT LI LU NL SE**

(56) Entgegenhaltungen:
**EP-A- 0 101 614        DE-B- 1 208 543
DE-B- 1 299 432        FR-A- 2 131 884
US-A- 3 679 343        US-A- 3 899 956**

**O + P REPORT '79, Band 23, Nr. 10A, Oktober
1979, Seite 34, Mainz, DE; "Hydrozylinder mit
elektronischem Wegmesssystem"**

**BUREAUX D'ETUDES AUTOMATISMES, Nr. 19,
September 1985, Seiten 67,68,70, Paris, FR;
C. JONET: "Vérins hydrauliques programmables"**

(73) Patentinhaber: **BÜHLER AG**

**CH-9240 Uzwil(CH)**

(72) Erfinder: **Groebli, Werner
Eisenbahnweg 19
CH-9230 Flawil(CH)**
Erfinder: **Hegelbach, Hugo
Weingarten
CH-9572 Busswil(CH)**
Erfinder: **Schaffner, Hanspeter
Armetsholzstrasse 2
CH-9244 Niederuzwil(CH)**

(74) Vertreter: **Révy von Belvárd, Peter
Im Lindengarten 18
CH-9242 Oberuzwil(CH)**

## Beschreibung

Die Erfindung betrifft eine Würfelpresse, auch Pelletpresse genannt, mit einer mit Bohrungen versehener Pressform und mit Pressrollen, die das zwischen ihnen und der Pressform erfasste Produkt durch die Bohrungen hindurch pressen, und mit einer Verstellvorrichtung für das Einstellen des Abstandes zwischen einer Pressrolle und der Pressform.

Es ist bekannt, den Spalt zwischen der Pressform in Funktion eines Parameters der Würfelqualität über die Maschinenregelung zu steuern (EP-A1 0 040 406). Die Erfindung erlaubt mit einfachen Mitteln ein einwandfreies Positionieren der Pressrollen zu erreichen, das von aussen gesteuert werden kann, sei es durch Eingabe eines Soll-Wertes, sei es durch Regelung in Funktion von Betriebsparametern.

In der EP-A2 0 101 614 ist eine Würfelpresse dargestellt, deren Verstellvorrichtung mit einer Vorrichtung zur Lagemessung der Pressrolle zusammenarbeitet. Diese Würfelpresse weist eine flache, horizontale Pressform auf, die am Pressengestell befestigt ist. Die Pressrollen sind auf horizontalen Achsen angeordnet, die an einem Tragkopf befestigt sind. Der Tragkopf ist auf einer vertikalen, vom Pressenmotor angetriebenen Welle drehfest, aber axial verschiebbar angebracht. Am Tragkopf ist mindestens eine vertikale dreieckige Messfahne auf einem radialen Arm angebracht. Am Maschinengestell ist ein berührungsfreier Sensor befestigt, der durch das Vorbeigehen der Messfahnen aktiviert wird. Die Dauer des Vorbeigehens der Messfahne am Sensor ist ein Mass für die axiale Lage des Tragkopfes auf der Antriebswelle und somit des Abstandes der Pressrolle zur Pressform. Dieses Mass kann die Pressenregelung beeinflussen und/oder er kann selber durch die Pressenregelung gesteuert werden. Weil die Messfahnen am Tragkopf und der Sensor am Maschinengestell befestigt sind, besteht die Möglichkeit einer unerwünschten Beeinflussung des Sensors durch das Produkt statt durch die Messfahne. Die Dauer des Vorbeigehens der Messfahne am Sensor hängt nicht nur von der axialen Lage des Tragkopfes auf die Antriebswelle ab, sondern auch von der Drehzahl dieser Antriebswelle, was die Regelung kompliziert macht.

Durch die erfindungsgemässe Würfelpresse sollen diese Probleme vermieden und die Regelung einfacher und sicherer gemacht werden. Diese Aufgabe wird auf erstaunlich einfache Art durch die kennzeichnenden Merkmale des Anspruches 1 gelöst.

Die Konstruktion wird einfach, wenn die Verstelleinrichtung eine hydraulische Zylinder-Kolben-Einheit aufweist, die mit einer Messvorrichtung für die Lage des Kolbens relativ zum Zylinder versehen ist. Alternativ kann aber auch für wenigstens eine Pressrolle die Verstellung der Pressrollen durch mindestens eine elektronisch gesteuerte Schraubenspindel erfolgen, die dann dieselbe Funktion als Stellglied hat, wie die Zylinder-Kolben-Einheit.

Mit Vorteil weist die Vorrichtung zur Lageregelung ein Regulierventil auf mit einer Soll-Werteingabe für die Lage des Kolbens und mit einer Rückführung für den Ist-Wert der Lage des Kolbens, wobei das Regulierventil die Zylinder-Kolbeneinheit je nach dem Sinn des Unterschieds zwischen Ist-Wert und Soll-Wert beaufschlagt.

Zum Erreichen und Einhalten einer genauen Lage wird der Kolben vorzugsweise doppelt wirkend ausgeführt. Dies hat gegenüber Kolben mit mechanischen Gegenkraftelementen, wie z.B. Federn, den Vorteil, dass keine Weg-Kraft-Abhängigkeit vorhanden ist.

Die Verstellvorrichtung, insbesondere die Soll-Werteingabe des Regulierventils kann an die Maschinenregelung angeschlossen werden.

Es ist möglich, das Regulierventil am Zylinder der Zylinder-Kolben-Einheit anzubauen.

Je nach Konstruktion der Würfelpresse kann die Zylinder-Kolben-Einheit die Pressrolle direkt in eine vorwiegend radiale Richtung verstellen. In den meisten Fällen greift sie aber auf den Exzenterbolzen, der zur Lagerung und Verstellung der Pressrolle dient.

Wenn die Verstelleinrichtung am Pressrollenträger, innerhalb des Arbeitsraumes der Presse angeordnet ist, werden die hydraulischen und elektrischen Leitungen über Drehanschlüsse durch die Welle des im Betrieb fest angeordneten Rollenträgers geführt. Damit werden diese Leitungen durch die Rotation dieses Rollenträgers nicht beeinträchtigt, die bei einer Ueberlastung der Presse geschieht, wenn der Brechbolzen, der diesen Rollenträger gegen eine Rotation sichert, bricht. Es ist möglich, die Lage der Pressrollen auch nach einem Bruch von aussen zu steuern, insbesondere um ein Blockieren einfacher zu beheben.

Den letzteren Vorteil erreicht man auch, wenn die Verstelleinrichtung an der Türe, ausserhalb des Arbeitsraumes der Presse angeordnet ist. Die Zugänglichkeit dieser insbesondere als Zylinder-Kolben-Einheit ausgebildeten Verstelleinrichtung wird für die Wartung verbessert.

Es ist möglich, für jede Pressrolle eine Verstelleinrichtung vorzusehen, aber auch eine solche auf mehrere Pressrollen wirken zu lassen.

Bei einer Ueberlastung der Presse, die meistens durch die zu hohe Stromaufnahme des Antriebsmotors gemeldet wird, kann nach Unterbrechen der Speisung die Kolben-Zylinder-Einheit die Pressrolle von der Pressform entfernt und dann schrittweise wieder in Richtung der Pressform verstellt wird, bis der Abstand der Pressrolle zur Pressform gleich Null ist. Wenn die in der Maschinenregelung eingespeicherte Lage der Pressrolle bei Abstand gleich Null erreicht wird, weiss man, dass die Pressform und die Pressrolle wieder sauber sind, und es ist nicht notwendig, die Maschine zu öffnen: Die Presse kann wieder mit der Speisung angefahren werden.

Die Präzision der Regelung wird stark verbessert, wenn der Wert der Abnützung der Paarung Pressform - Pressrolle in Funktion der Betriebszeit, und/oder der produzierten Menge in die Maschinenregelung eingegeben und eingespeichert wird, und zur Korrektur des Abstandes der Pressrolle zur Pressform dient. Es ist auch möglich bei sauberer Presse die Lage der Pressrolle beim Spalt gleich Null durch die Erhöhung des Druckes in der Zylinder-Kolben-Einheit festzustellen, und diese Lage der Pressrolle in der Maschinensteuerung zu speichern. Damit kann auch die eingespeicherte Funktion Abnützung = f(Zeit) nach Bedarf kontrolliert werden. Diese Konstruktion und Arbeitsweise bringen auch einen grossen Vorteil hinsichtlich Personenschutz, weil die Türe weniger oft geöffnet werden muss, was die Unfallgefahr vermindert.

Die Zeichnung zeigt schematisch als Beispiel verschiedene Ausführungsformen der Erfindung.

Fig. 1      ist ein Schnitt entlang der Linie I-I der Fig. 2 durch den Arbeitsraum einer erfindungsgemässen Würfelpresse, ohne die Zylinder-Kolben-Einheit für die Verstellung der Pressrollen.

Fig. 2      ist eine noch stärker schematisierte Ansicht in grösserem Massstab in Richtung des Pfeiles II der Fig. 1. Die Projektionsebene ist vertikal und der Beobachter blickt auf die Frontseite der Maschine bei offener Türe.

Fig. 3      ist ein Schnitt in noch grösserem Massstabe durch die Kolben-Zylinder-Einheit der Fig. 2 mit einem elektrohydraulischen Schema für die Regelung der Lage des Kolbens.

Fig. 3A      ist ein Axialschnitt durch eine abgewandelte Ausführungsform der Pelletpresse mit ausserhalb des Arbeitsraumes, an der Türe des Maschinengehäuses angeordneter Verstelleinrichtung, wogegen

Fig. 3B      eine Ausführungsvariante ähnlich Fig. 2, jedoch mit einer Schraubenspindel an Stelle der Zylinder-Kolben-Einheit zur Verstellung der Pressrollen zeigt.

Fig. 4      ist eine der Fig. 2 entsprechende Ansicht einer weiteren Ausführungsform der Erfindung.

Fig. 5      ist ein Schnitt in grösserem Massstab durch eine Kolben-Zylinder-Einheit der Fig. 4.

Fig. 6      ist eine vertikale Ansicht von vorne auf eine Würfelpresse nach einer anderen Ausführungsform der Erfindung.

Fig. 7      ist ein Schnitt auf den Arbeitsraum einer Würfelpresse nach einer sechsten Ausführungsform, in einer Ansicht entsprechend jener der Fig. 1.

Fig. 8      ist ein Schema der in Fig. 3 angedeuteten, und auch im Zusammenhang mit der Kolben-Zylinder-Einheit der Fig. 5 verwendbaren Maschinenregelung, wobei die für die Erfindung wesentlichen Steuerungsteile in ihrem Zusammenhang mit einer Pressensteuerung bekannter Bauart dargestellt sind.

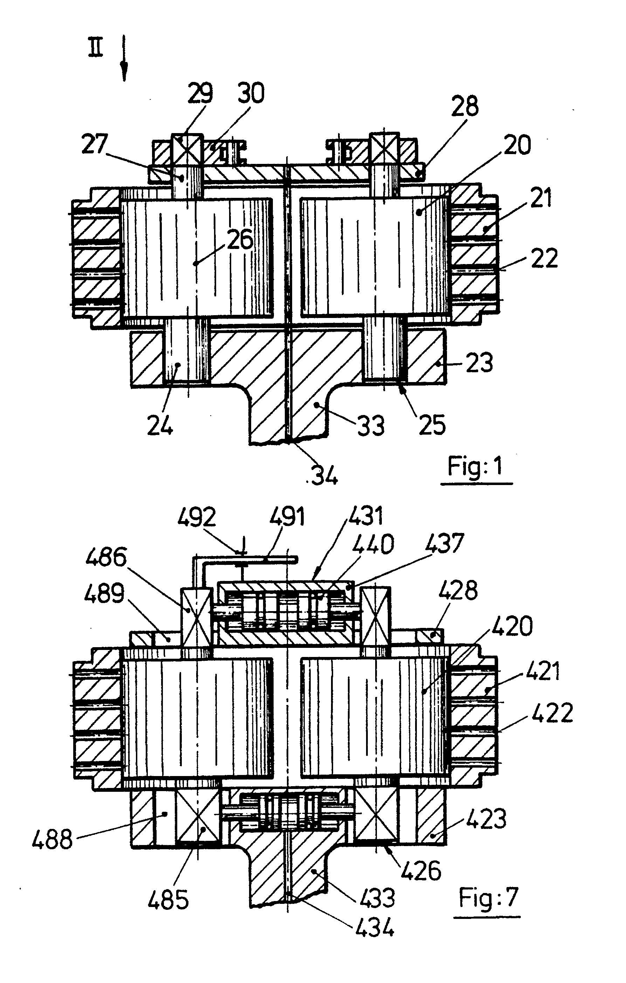

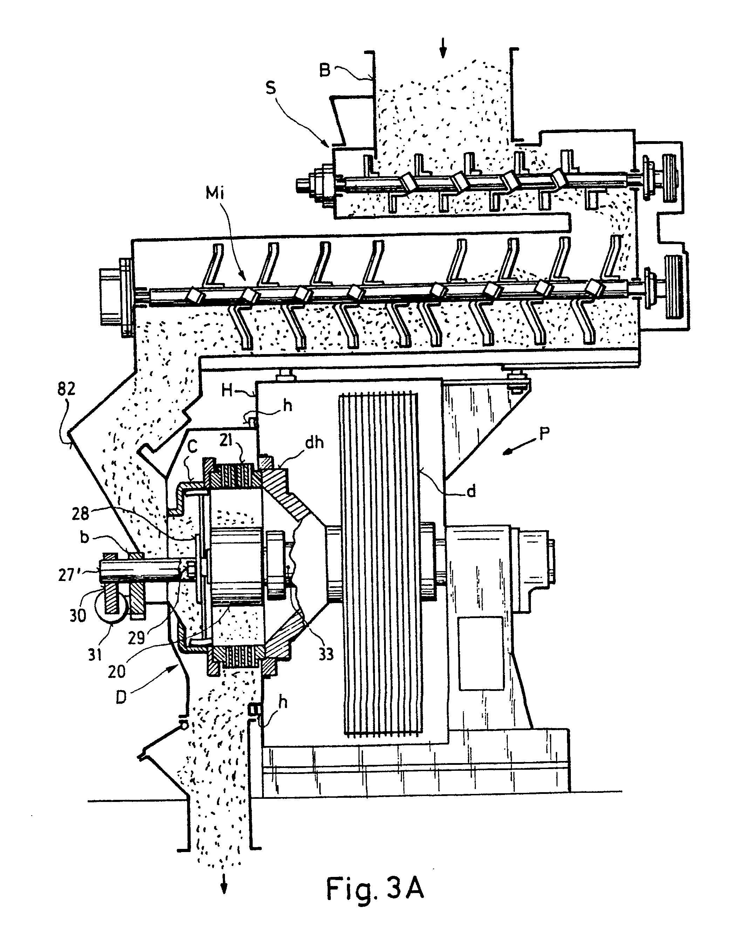

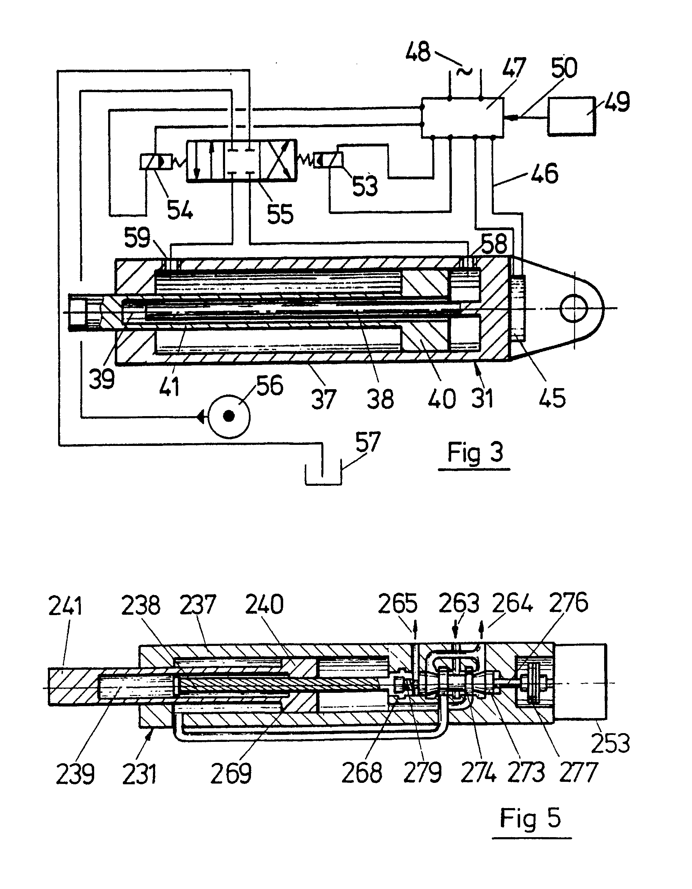

Pressrollen 20 (Fig. 1) sind in einer ringförmigen Pressform 21 angeordnet, welche Pressbohrungen 22 aufweist. Die Pressform 21 ist mit einem aus Fig. 3A ersichtlichen rotierenden Pressformhalter dh fest verbunden. Ein fest angeordneter Rollenträger 23 dient der Lagerung der zylindrischen Füsse 24 von Exzenterbolzen 25. Diese Exzenterbolzen 25 haben eine gegenüber diesem Fuss 24 exzentrische Lagerspindel 26 für die Pressrollen 20 und einen zum Fuss 24 koaxial angeordneten Fortsatz 27. Die Fortsätze 27 der Exzenterbolzen 25 sind in einem sie verbindenden, durch nicht dargestellte Stehbolzen am Rollenträger 23 befestigten Rollensteg 28 drehbar angeordnet.

Die Fortsätze 27 werden je mit einen Sechskant 29 zum drehfesten Anbringen eines Hebels 30 versehen. Zwischen den Hebeln 30 ist eine Zylinder-Kolben-Einheit 31 angelenkt. Der Rollenträger 23 ist an einer horizontalen, fest angeordneten Tragwelle 33 befestigt. An ihrer anderen, nicht dargestellten, Seite ist die Tragwelle 33 im Maschinengestell gelagert und durch einen Brechbolzen drehfest gehalten. In der Tragwelle 33 sind weitere hydraulische Leitungen 34 sowie nicht dargestellte elektrische Leitungen (sowie Schmierleitungen) vorgesehen, die auf der nicht dargestellten Seite der Tragwelle 33 über Drehanschlüsse mit den hydraulischen und elektrischen Steuerungsteilen verbunden sind.

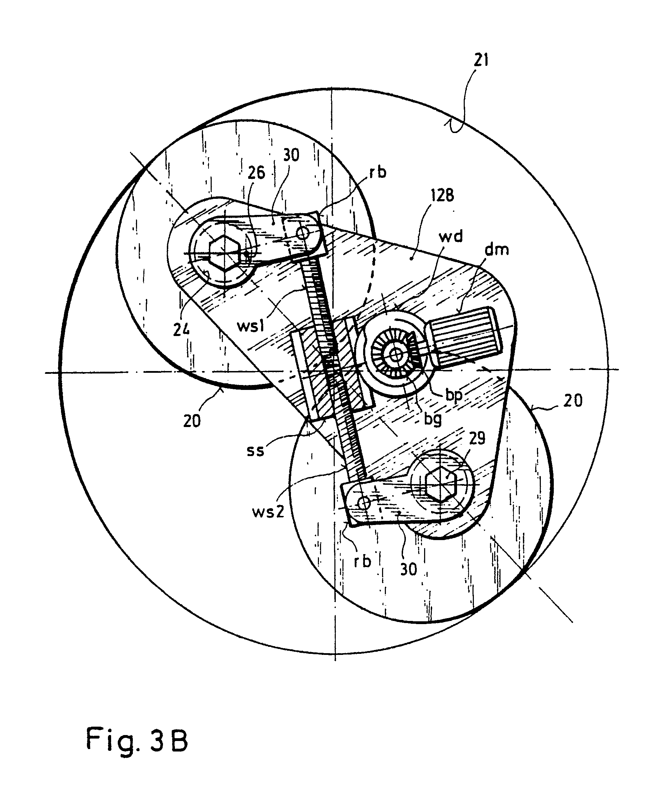

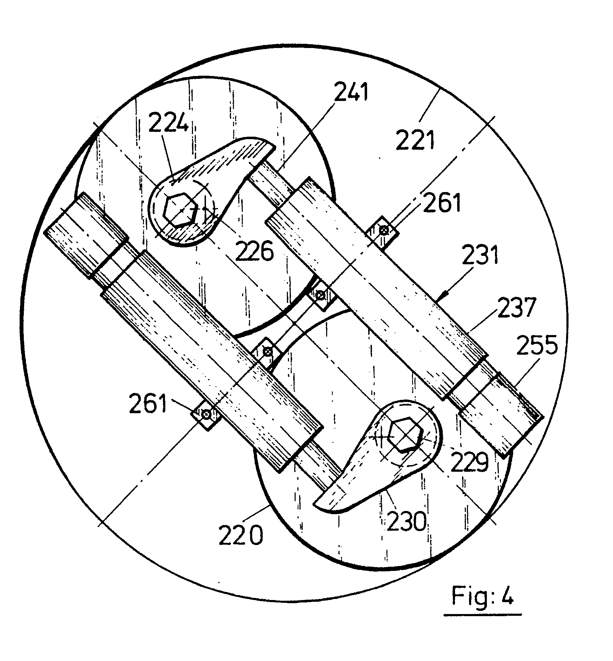

Im Zylinder 37 (Fig. 3) der Zylinder-Kolben-Einheit 31 ist eine Messstange 38 befestigt, die in geringem Abstand mit einer Messbohrung 39 des doppeltwirkenden Kolbens 40 und seiner Kolbenstange 41 zusammenwirkt. Die genaue axiale Lage des Kolbens 40 wird durch eine Wegmesselektronik 45 gemessen und durch eine Rückführung 46 einem Lageregler 47 als Ist-Wert rückgeführt. Dieser Lageregler 47 ist an eine elektrische Speisung 48 angeschlossen und erhält den Sollwert aus der Maschinenregelung 49 über eine Sollwerteingabe 50.

Am Lageregler 47 sind zwei Steuerventile 53, 54 angeschlossen, die ein Vierwegventil 55, das mit einer mittleren Absperrposition versehen ist, betätigen. Das Vierwegventil 55 ist an eine Pumpe 56, oder an einer anderen Druckmedienquelle, am Tank 57 sowie an den Anschlüssen 58, 59 des Zylinders 37 auf den beiden Seiten des doppeltwirkenden Kolbens 40 angeschlossen. Als Steuerventile 53, 54 können je nach den Anforderungen an die Regelung Digitalventile, Proportionalventile oder Servoventile verwendet werden.

Wenn der Ist-Wert dem Soll-Wert entspricht, so bleibt das Vierwegventil 55 in der dargestellten mittleren Absperrposition. Ist der Abstand zwischen den Pressrollen 20 und der Pressform 21 zu gross, dann schaltet der Lageregler 47 das Steuerventil 53 ein. Damit verbindet das Vierwegventil 55 die Pumpe 56 mit dem Anschluss 58. Durch die Bewegung des Kolbens 40 und der Kolbenstange 41 verlängert sich die Zylinder-Kolben-Einheit 31 und die Hebel 30, die um die Achse des jeweiligen Fusses 24 bzw. Fortsatzes 27 drehen, verstellen die Exzenterbolzen 25 und mit ihnen die Pressrollen 20 in Richtung der Pressform 21, bis der Sollwert wieder erreicht ist. Dann schaltet der Lageregler 47 das Steuerventil 53 ab, und das Vierwegventil 55 kommt wieder in die mittlere Absperrposition.

Ist der Abstand der Pressrollen 20 zur Pressform 21 zu klein, dann schaltet der Lageregler 47 das Steuerventil 54 ein, das die Pumpe 56 mit dem Anschlusse 59 der Zylinder-Kolben-Einheit 31 verbindet, so dass die Pressrollen 20 in analoger Weise von der Pressform 21 entfernt werden.

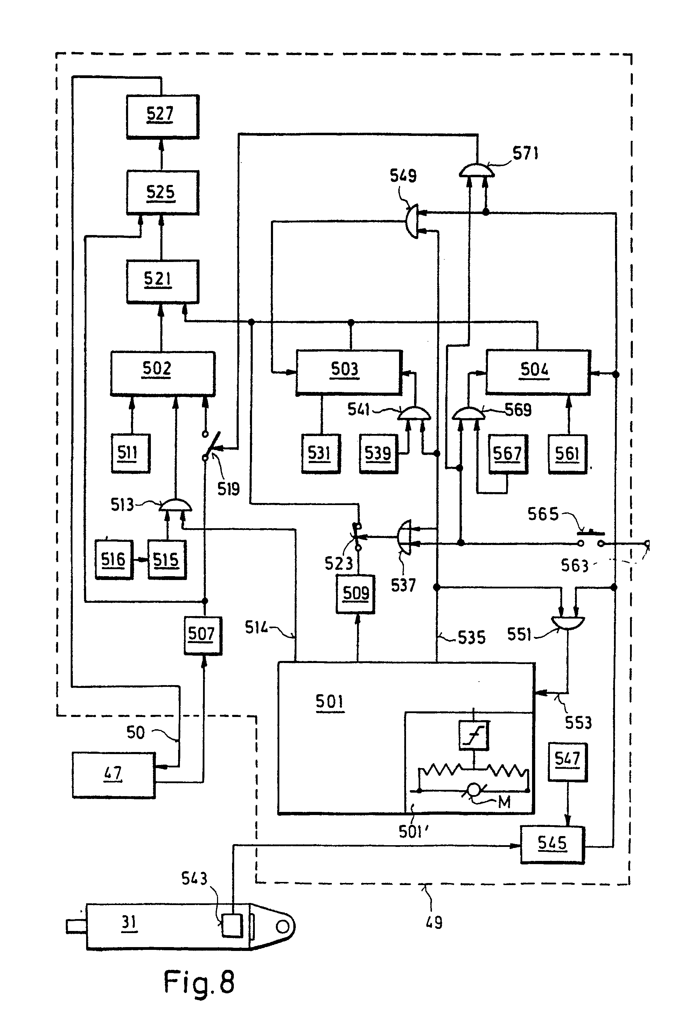

Bei den weiteren Ausführungsformen besitzen Teile gleicher oder ähnlicher Funktion die gleichen Bezugszeichen wie bei der ersten Ausführungsform, jedoch mit einer Hunderterziffer. Diese Verwandschaft gilt naturgemäss nicht für die Numerierung der Steuerungteile im Schema der Fig. 8.

In Fig. 3A ist die Pelletpresse in einem Axialschnitt dargestellt. Es ist ersichtlich, dass das zu verpressende Material aus einem Einfülltrichter B in einen Förder- und Dosierapparat S und von dort in einen Mischer Mi gelangt. Diese beiden Apparate stehen an der Oberseite eines Gehäuses H der eigentlichen Pelletpresse P, wobei der Ausgang des Mischers Mi in einen abgeknickten Einfüllkasten 82 fördert, der darunter angeordnet, jedoch mit dem Mischer Mi nicht starr verbunden ist. Die Unterseite des Einfüllkastens 82 mündet nämlich durch eine an Scharnieren h schwenkbar aufgehängte Türe D hindurch in einen Formdeckel C und ist mit dieser Türe D verschwenkbar.

Ein Antriebsrad d dient dazu, einen Formhalter dh in Drehung zu versetzen, während gleichzeitig die Tragwelle 33 für die Pressrollen 20 in ihren Lagern (rechts in Fig. 3A) fixiert ist und so nur die Rolle einer Drehachse für den Formhalter dh spielt. Es ist aber bereits vorgeschlagen worden, die Pressrollen zu drehen, während die Form 21 stillsteht, und es sei darauf hingewiesen, dass es für die Zwecke der vorliegenden Erfindung lediglich wesentlich ist, dass eine Relativbewegung zwischen Form 21 und Pressrollen 20 stattfindet, was theoretisch auch durch entgegengesetzte Drehung dieser beiden Teile erreicht werden könnte.

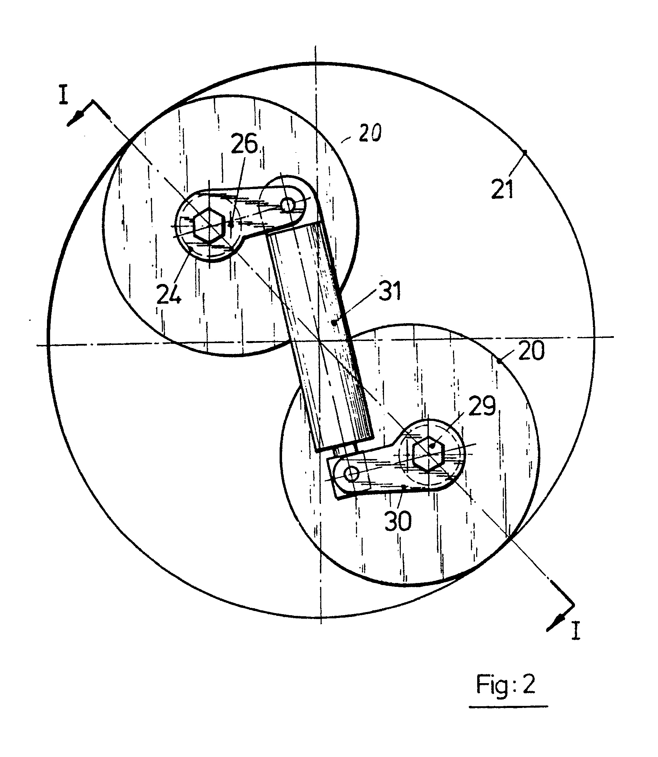

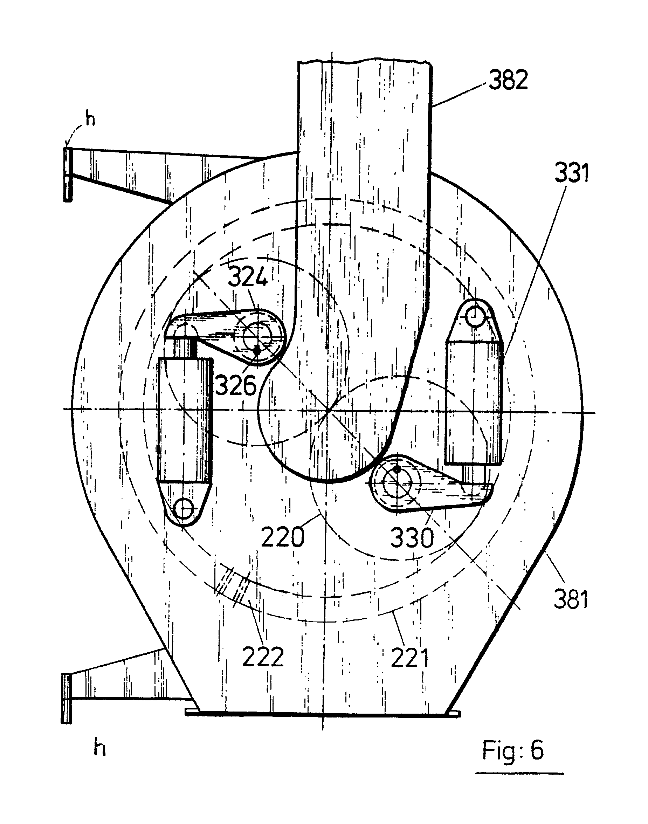

Bei dieser Ausführungsform ist die Verstelleinrichtung in Form der Zylinder-Kolben-Einheit 31 zur Verbesserung der Zugänglichkeit an der Aussenseite der Türe und damit ausserhalb des Arbeitsraumes der Pelletpresse P angeordnet. Hiezu ist mit dem an Hand der Fig. 1 bis 3 beschriebenen Sechskant 29 eine Verlängerungswelle 27' drehfest gekuppelt (Klauenkupplung), die an der Aussenseite der Türe D in einem mit der Türe D fest verbundenen Lagerblock b gehalten ist und an ihrem Ende den Hebel 30 trägt. Die Zylinder-Kolben-Einheit 31 kann dann ebenfalls am Lagerblock b befestigt werden. Eine Variante dieser Ausführung mit an der Aussenseite der Türe angeordneter Verstelleinrichtung ist in einer Frontansicht der Fig. 6 zu entnehmen.

Es ist aber nicht unbedingt erforderlich, als Verstelleinrichtung eine Zylinder-Kolben-Einheit zu verwenden, wie an Hand der Fig. 3B veranschaulicht wird. Hier ist mit den Enden der Hebel 30 je ein Spurlager rb gelenkig verbunden, in dem jeweils das Ende einer Schraubspindel ws1 bzw. ws2 axial unverschieblich, aber drehbar gelagert ist. Wie ersichtlich, besitzt jede Schraubspindel ws1 bzw. ws2 eine der anderen entgegengesetzte Gewinderichtung. Beide Schraubspindeln ws1, ws2 sind an den einander zugekehrten Enden in eine Schraubhülse 55 eingeschraubt, die jeweils bis zur Hälfte ihrer Länge reichende, ebenfalls einander entgegengesetzte und den Gewinden der Spindeln ws1, ws2 entsprechende Innengewinde besitzt. An ihrer Aussenseite ist die Schraubhülse ss als Schraubenrad ausgebildet, das mit einem Antriebsrad wd im Eingriff steht. Das Antriebsrad wd ist zusammen mit einem gleichachsigen Kegelrad bg am Pressrollensteg 128 gelagert, an dem auch ein Antriebsmotor dm befestigt ist, dessen Kegelritzel bp mit dem Kegelrad bg in Eingriff steht.

Es versteht sich, dass die Verstelleinrichtung auf die verschiedenste Weise ausgebildet sein kann. Im Falle der Fig. 3B wird es sich empfehlen, den Motor dm als Schrittmotor auszubilden, wobei aus der Anzahl der Schritt von einer Endlage aus auch die Position der Pressrollen 20 für das Regelsystem bekannt ist. Beim Einschalten der Pelletpresse kann der Schrittmotor - wie es von anderen Schrittmotorsteuerungen (z.B. für Schreibmaschinen oder Glücksspielautomaten) bekannt ist - erst durch ein nicht flüchtiges Programm in die Endlage gebracht werden, wobei die dazu nötigen Schritte in einem Zähler gezählt werden, worauf die Drehrichtung des Motors dm umgekehrt wird und er sich so lange dreht, bis der Zähler wieder auf Null gebracht ist. In diesem Augenblick hat der Motor seine Ausgangslage erreicht, die er einnahm, bevor die Pelletpresse eingeschaltet wurde.

Es versteht sich ferner, dass an stelle zweier Spindeln ws1, ws2 auch eine einzige vorgesehen sein könnte, wobei an Stelle der Lager rb dann Schraubhülsen vorzusehen sind, in die die Spindel sich mehr oder weniger einschraubt. In der Mitte der Spindel kann dann ein Schraubenrad an Stelle der Hülse ss vorgesehen sein.

Bei der vierten Ausführungsform ist nicht der Abstand jeder Pressrolle 20 zur Pressform 21 einzeln geregelt, sondern die Summe dieser Abstände. Diese Lösung hat den Vorteil eines kleinen apparativen Aufwands, weil eine einzige Zylinder-Kolben-Einheit 31 für die Regelung der beiden Pressrollen 30 genügt. Wenn sich die gespiesene Produktmenge ungleich zwischen den beiden Pressrollen 20 teilt, stellt sich das Verhältnis der beiden Abstände zueinander automatisch ein, und die Anstellkraft bleibt bei beiden Pressrollen gleich, was eine gleichmässige Abnützung verursacht und die Uebertragung von nicht kompensierten Anpresskräften auf den Formträger vermeidet.

In manchen Fällen ist es aber erwünscht, den Abstand von jeder Pressrolle zur Pressform genau zu regeln, was mit der zweiten Ausführungsform (Fig. 4), möglich ist. Für jede Pressrolle 220 ist eine besondere Zylinder-Kolben-Einheit 231 vorgesehen, die über Befestigungslappen 261 mit Schrauben an den nicht dargestellten Rollensteg befestigt ist.

Das Vierwegventil 255 ist am Zylinder 237 angebaut (Fig. 5), und somit in der Zylinder-Kolben-Einheit 231 integriert. Der Eingang 263 ist mit der Pumpe und der Ausgang 264 mit dem Tank verbunden. Der Leckölausgang 265 geht zum Tank.

In eine Bohrung 239 der Kolbenstange 241 dringt eine Schraubenspindel 238 grosser Steigung, deren axiale Lage durch ein axiales Lager 268 bestimmt ist und konstant bleibt. Die Schraubenspindel 238 wirkt mit einem Muttergewinde 269 im gegen Drehung gesicherten doppelt wirkenden Kolben 240 zusammen, so dass bei einer axialen Betätigung des Kolbens 240 die Schraubenspindel 238 sich um einen genau entsprechenden Winkel dreht. Die Sicherung des Kolbens 240 gegen Verdrehen kann auf vielfältige Art beim äusseren Teil der Kolbenstange 241 geschehen.

Ein Ventilkörper 273 weist zwei Flanschen 274 mit Steuerkanten auf, die in der mittleren Lage alle Ein- bzw. Ausgänge 258, 259, 263, 264 gegeneinander absperren. Am Ventilkörper 273 ist eine Stange 276 befestigt, die über eine drehfeste aber axial elastische Kupplung 277 mit einem Schrittmotor 253 verbunden ist, der durch den Lageregler in die gewünschte Richtung gesteuert wird oder stillsteht. Am Ventilkörper 273 ist noch eine Schraube 279 kleiner Steigung befestigt, die mit einem nicht bezeichneten Muttergewinde in der axial festgehaltenen Schraubenspindel 238 zusammenwirkt.

Bei der in Fig. 5 dargestellte Lage sei zunächst angenommen, dass der Kolben 240 in der richtigen Lage ist, und der Schrittmotor somit stillsteht. Soll z.B. die Kolbenstange 241 ausgezogen werden, wird der Schrittmotor 253, und mit ihm der Ventilkörper 273 um den gewünschten Winkel gedreht, und die Schraube 279 schraubt sich um eine bestimmte Länge aus dem am Ende der axial festgehaltenen Schraubenspindel 238 angebrachten Muttergewinde aus. Der Ventilkörper 273 bewegt sich um die gleiche Länge nach rechts und verbindet den Eingang 263 von der Pumpe mit dem Eingang 258 auf der rechten Seite des Kolbens 240. Gleichzeitig wird der Eingang 259 auf der linken Seite des Kolbens 240 mit dem Ausgang 264 zum Tank verbunden. Der Kolben 240 bewegt sich nach links und die Mutter 269 dreht die Schraubenspindel 238 um den entsprechenden Winkel. Damit wird die Schraube 279 wieder in die axial festgehaltene Spindel 238 eingeschraubt und der Ventilkörper 273 wird nach links gezogen, bis die Flanschen 274 mit Steuerkante die Ein- bzw. Ausgänge 258, 259, 263, 264 wieder sperren, so dass der Kolben 240 stillsteht.

Mit einer solchen Vorrichtung ist es einfach, die Abnützung zu kompensieren. Bei einer angenommenen Abnützung der Paarung Pressrolle - Pressform von 2 mm bei einer Betriebsdauer von 100 Stunden, und einer Auflösung der Längsvorrichtung 238, 279 von 0,01 mm pro Schritt des Schrittmotors 253, muss die Maschinenregelung jede halbe Stunde den Soll-Wert um einen Schritt verstellen. Schon diese Betriebsweise allein, ohne weitere Regelung des Abstandes der Pressrolle 220 zur Pressform 221 bringt eine beträchtliche Verbesserung. Statt der Betriebsdauer kann man in die Maschinenregelung die gemessene verarbeitete Menge Produkt eingeben, die ein noch genaueres Mass der Abnützung ergibt. In diesem Zusammenhang sind noch Einzelheiten der Maschinensteuerung 49 beim Schema der Fig. 8 zu sehen, die weiter unten besprochen werden.

In der Fig. 4 ist eine einseitige Anlenkung der Kolbenstangen 241 an den Hebeln 230 gezeigt. Das zwischen den Pressrollen 220 und der Pressform 221 eingezogene Produkt übt auf die Pressrollen 220 Kräfte, die diese Pressrollen 220 von der Pressform 221 entfernen wollen, und die durch die Zylinder-Kolben-Einheiten 231 aufgenommen werden.

Bei den beiden ersten Ausführungsformen sind Zylinder-Kolben-Einheiten im Pressraum angeordnet und kommen in Kontakt mit dem Produkt. Daraus entstehen aber normalerweise keine Störungen. Wenn aber sehr strenge Bedingungen für die Reinheit des Produktes einzuhalten sind, ist es nach der dritten Ausführungsform der Erfindung möglich, die Zylinder-Kolben-Einheiten 331 auf der Aussenseite der Türe 381 (Fig. 6) anzulenken. Um die Hebel 330 am gewünschten Ort anbringen zu können, ist der Speisekasten 382 seitlich leicht versetzt angeordnet. Die Füsse 324 der Exzenterbolzen sind in der Türe selber gelagert. Die Fortsätze für das Anbringen der Hebel 330 sind auf der Frontseite der Füsse 24 angebracht und die Lagerspindel für die Pressrollen 320 auf der hinteren Seite dieser Füsse 324. In einer Variante kann die Zylinder-Kolben-Einheit 331 durch eine elektronisch angetriebene Spindel ersetzt werden, weil es keinen Kontakt mit dem Produkt gibt.

Bei den drei ersten Ausführungsformen müssen die Hebel 30, 230, 330 auf den Sechskanten 29, 229 umgesteckt werden, wenn die Abnützung ein gewisses Mass erreicht hat. Dank diesem Umstecken kann wieder ein optimales Zusammenwirken der Kolbenstangen 41, 241, 341 mit den Hebeln 30, 230, 330 erreicht werden. Bei der vierten Ausführungsform kann dank einer radialen Verstellung der Presskolben ein grösserer Weg gefahren werden, ohne umzustellen. Ferner ist das Verhältnis zwischen dem Weg der Kolben und dem Weg der Pressrollen linear, was die Programmierung der Steuerung vereinfachen kann.

Die Pressrollen 420 (Fig. 7) sind jeweils auf einer Lagerspindel 426 gelagert, die in einem vierkantigen Kopf 485 bzw. 486 endet. Auf diese Köpfe 485, 486 drücken die doppelt wirkenden Kolben 440 in Richtung der Pressform 421. Die Zylinder 437 der Zylinder-Kolben-Einheiten 431 sind mit dem Rollenträger 423 bzw. mit dem Rollensteg 428 integriert. Die Köpfe 485, 486 gleiten in radialen Führungen 488, 489 des Rollenträgers 423 bzw. des Rollenstegs 428. Am Vierkant 492 ist eine Stange 491 angebracht, die in einem Wegmesser 492 gleitet.

Beim Schema der Fig. 8 enthält die Maschinensteuerung 49 eine Pressensteuerung 501, die an sich bekannter Bauart sein kann und eine Überwachungsschaltung 501' für die Überlastung des Pressenmotors M für den Antrieb der Form 21 und/oder der Pressrollen 20 enthält. Eine solche Schaltung ist beispielsweise aus der US-PS 3,932,736 bekannt geworden, auch sind Funktion und Wirkung der Pressensteuerung 501 der EP-A 0 040 406 zu entnehmen. Dabei wird bei Überlastung wenigstens die Pressenspeisung (Dosierer S in Fig. 3A) unterbrochen, gegebenenfalls auch die Stromzufuhr zum Motor M der Presse selbst, dessen Stromaufnahme mittels des Stromkreises 501' überwacht wird. Für die Steuerung der Lage der Pressrollen sind drei Speicher vorgesehen. Ein Speicher 502 für die Null-Lage der Pressrollen, d.h. beim Abstand Null zwischen Pressrollen und Pressform gibt ständig den gespeicherten Wert weiter. Während des normalen Betriebes der Presse ist die Ausgabe der Werte aus einem Programmspeicher 503 gesperrt, der ein zeitgesteuertes Programm für den Soll-Abstand der Pressrollen nach einer Ueberlast enthält. Ebenfalls gesperrt während des normalen Betriebes der Presse sind die in einem Programmierspeicher 504 enthaltenen Werte eines zeitgesteuerten Programms für das automatische Messen der Null-Lage der Pressrolle bei sauberer Form.

Eine Anzeige 507 zeigt den Ist-Wert der Lage der Pressrollen (Ist-Lage), die vom Lageregler 47 gemeldet wird. Eine Anzeige 509 zeigt den Soll-Wert des Abstandes der Pressrollen von der Form (Soll-Abstand). Dieser Soll-Abstand wird durch die Pressensteuerung 501 aufgrund des momentanen technologischen Zustandes der Würfelpresse durch die Pressensteuerung 501 berechnet und gemeldet. Unter Lage der Pressrollen ist die Lage der Achse ihrer Lagerspindel 26 (Fig. 1) zu verstehen. Diese Lage der Pressrollen ist durch die Lage des Kolbens relativ zum Zylinder der Zylinder-Kolben-Einheit bestimmt. Der Abstand wird zwischen dem Umfang der Pressrollen und dem inneren Umfang der Pressform gemessen.

Der Speicher 502 kann auf drei Arten beeinflusst werden:

a) mit einer Eingabe 511 kann von Hand der, z.B. beim Einstellen der Würfelpresse, beobachtete oder gemessene Wert des Null-Abstandes eingegeben werden.

b) Durch Impulse für die Kompensation der Abnützung von Pressrollen und Pressform kann der im Speicher 502 aufgespeicherte Wert geändert werden. Die Impulse kommen über ein UND-Glied, das einerseits vom Ausgang 514 der Pressensteuerung 501 ein Signal erhält, solange die Würfelpresse im Betrieb ist, und anderseits von einem Zeitimpuls-Geber 515 Impulse erhält, deren Rhythmus mit Hilfe einer Einstellvorrichtung 510 gewählt werden kann. Der Rhythmus wird entsprechend der zu erwartenden Verschleissintensität des zu bearbeitenden Produktes gewählt.

c) Durch Schliessen eines während des normalen Betriebes offenen Arbeitskontaktes 519 kann der jeweilige Wert der Anzeige 507 der Ist-Lage der Pressrollen im Speicher 502 aufgenommen werden. Dies geschieht z.B. bei der unten beschriebenen automatischen Messung der Null-Lage mit Hilfe des Programmspeichers 504.

Die im Speicher 502 gespeicherte Null-Lage wird einem Addierer 521 zugeleitet, der über einem im normalen Betrieb geschlossenen Arbeitskontakt 523 auch den Wert des Soll-Abstandes aus der Anzeige 509 erhält. Der Addierer 521 errechnet die Soll-Lage der Pressrollen und führt sie auf einen Subtrahierer 525 der aus der Anzeige 507 auch den Wert der Ist-Lage der Pressrollen erhält.

Das Ergebnis des Subtrahierers 525 wird dem Null-Vergleicher 527 zugeführt, der dem Lageregler 47 über den Eingang 50 dieses Ergebnis je nachdem als positive oder negative Impulse zustellt.

Es wäre auch möglich, wie oben bei der Beschreibung der Fig. 3 angedeutet, vom Subtrahierer 525 direkt auf den Lageregler 47 zu gehen, der dann intern den Vergleichsoll-Wert/Ist-Wert besorgt.

Der Programmspeicher 503 kann mit einer Programm-Eingabe 531 programmiert werden, um einen Zeitablauf der Abstände der Pressrollen zu bestimmen, wenn die Pressensteuerung 501 nach einer Ueberlastung des Antriebmotores den Betrieb der Würfelpresse (oder wenigstens deren Speisung) unterbrochen hat. Der beim normalen Betrieb der Würfelpresse gesperrte Ausgang des Programmspeichers 503 ist mit dem Addierer 521 zur Berechnung der Soll-Lage der Pressrollen verbunden. Nach dem erwähnten Betriebsunterbruch gibt die Pressensteuerung 501 bei ihrem Ausgang 535 ein Signal, das den Arbeitskontakt 523 über ein ODER-Glied 537 öffnet. Dieses Signal und die Impulse aus einem raschen Taktgeber 537 wirken auf ein UND-Glied, das die Impulse zur Steuerung des Ablaufs des gespeicherten Programms im Programmspeicher 503 und ihre Weitergabe an den Addierer 521 veranlasst. Das Signal aus dem Ausgang 535 bleibt während einer Dauer bestehen, die den Ablauf des Programms gewährleistet.

Die Zylinder-Kolbeneinheit 31 ist mit einem Sensor 543 versehen, der den Druck des Druckmediums auf der Kolbenseite misst, die zur Annäherung der Pressrollen zur Pressform dient. Der Sensor 543 gibt ein dem Druck entsprechendes elektrisches Signal an einen Vergleicher 545, auf welchen eine Eingabe 547 für einen maximal zulässigen Druck wirkt. Beim Ueberschreiten dieses Druckes gibt der Vergleicher 545 einen Impuls auf ein UND-Glied 549, das auch das Signal vom Ausgang 535 der Pressensteuerung 501 erhält. Das UND-Glied 549 kann den Impuls aus dem Vergleicher 545 dem Programmspeicher 503 zuleiten, um den Ablauf des Programmes zu stoppen und den Programmspeicher 503 unter Ausschaltung des Effektes der Impulse aus dem UND-Glied zurückzustellen. Alternativ könnte das Ausgangssignal des Vergleichers 545 auch an Stelle der Steuerung 501'

zum Erkennen der Ueberlastung der Presse benützt und der Steuerung 501 zum Initiieren des Programmes über deren Ausgang 535 zugeleitet werden.

Selbstverständlich kann an Stelle des Sensors 543 für den Fluiddruck im Zylinder 31 auch jeder andere Druckaufnehmer für den Pressrollendruck verwendet werden, beispielsweise ein piezoelektrischer Druckmesser am Pressrollenlager oder an der Kolbenstange des Zylinders 31.

In der dargestellten Ausführung gemäss Fig. 8 ist auch ein UND-Glied 551 an den Ausgang 535 der Pressensteuerung 501 und an den Ausgang des Vergleichers 545 angeschlossen. Es leitet den Impuls aus den Vergleicher 545 dem Eingang 553 der Pressensteuerung 501 zu, um das Wiederanfahren der Würfelpresse ohne Oeffnen der Pressentüre für die Reinigung des Pressraumes zu verhindern.

Der Programmspeicher 504 kann mit einer Programmeingabe 561 programmiert werden, um den Ablauf der Abstände der Pressrollen zu steuern, damit die Null-Lage der Pressrollen festgehalten werden kann. Der im normalen Betrieb gesperrte Ausgang des Programmspeichers 504 ist mit dem Addierer 521 zur Berechnung der Soll-Lage der Pressrollen verbunden. Beim Schliessen eines an einer Klemme 563 angeschlossene Druckknopfschalters 565 wird über dem ODER-Glied 537 der Arbeitskontakt 523 geöffnet. Am Druckknopf-Schalter 565 ist ein UND-Glied 567 und an einem schnellen Taktgeber 567 ist ein UND-Glied 569 angeschlossen, der zum Programmspeicher 504 die Impulse zur Steuerung des Ablaufes des gespeicherten Programmes und zur Zuleitung der entsprechenden Werte an den Addierer 521 durchlassen kann. Der Programmspeicher 504 ist mit dem Ausgang des Vergleichers 545 verbunden, dessen Steuerimpuls den Ablauf des Programms beendet und den Programmspeicher 504 zurückstellt Ein UND-Glied 571 ist am Druckknopfschalter 565 und an der Ausgangsseite des Vergleichers 545 verbunden. Er leitet den Steuerimpuls aus dem Vergleicher 545 zur Schliessung des Arbeitskontaktes 519 weiter.

Die Funktion der Steuerung ist folgende:
Beim Formwechseln wird die Null-Lage der Pressrollen gemessen und von Hand in die Eingabe 511 eingegeben. Entsprechend der zu erwartenden Rate der Abnützung von Pressrollen und Pressform wird bei der Einstellvorrichtung 516 der Rhythmus des Zeitimpulsgebers 515 gewählt. Beim normalen Betrieb der Presse wird das UND-Glied 513 vom Signal aus dem Ausgang 514 der Pressensteuerung ständig beaufschlagt und überträgt die Impulse aus dem Zeitimpuls-Geber 515 auf den Speicher 502, wo die gespeicherte Null-Lage somit entsprechend der Betriebsdauer verändert wird. Die Null-Lage aus dem Speicher 502 und der von der Pressensteuerung 501 berechnete und bei der Anzeige 509 angezeigte Soll-Abstand der Pressrollen zur Pressform werden dem Addierer 521 zugeleitet, der die Soll-Lage der Pressrollen berechnet. Diese berechnete Soll-Lage und die Ist-Lage aus der Anzeige 507 werden dem Subtrahierer 525 zugeleitet, der die Abweichung von der Soll-Lage mit den entsprechenden Zeichen auf den Null-Vergleicher 527 weitergibt. Dieser gibt die notwendigen Steuerimpulse mit den gewünschten Vorzeichen dem Lageregler 47 weiter.

Findet eine Ueberlastung statt, die zum Stillegen der Würfelpresse bzw. ihrer Speisung durch die Pressensteuerung 501 führt, dann gibt die Pressensteuerung 501 an ihrem Ausgange 535 ein Signal ab, dessen Dauer so gewählt ist, dass der Ablauf des ganzen nachstehend beschriebenen Prüfprogrammes gewährleistet ist. Das Signal aus dem Ausgang 535 öffnet über das ODER-Glied 537 den Arbeitskontakt 523, der die Verbindung zwischen der Anzeige 509 des Soll-Abstandes und den Addierer 521 unterbricht. Gleichzeitig werden die Impulse des raschen Taktgebers 539 über das UND-Glied 541 dem Programmspeicher 503 zugeleitet, dessen Ausgang entsperrt wird, und dessen Programm entsprechend dem gegebenen Takt abläuft. Damit erhält der Addierer 521 den Wert des Soll-Abstandes aus dem Programmspeicher 503. Zunächst gibt das Programm eine Erhöhung des Abstandes an. Dann befiehlt das Programm eine Verstellung der Pressrollen bis zum Null-Abstand.

Sollte die Pressform noch mit Produkt bedeckt sein, dann erhöht sich beim Auftreffen der Pressrollen auf das Produkt der vom Sensor 543 an der Zylinder-Kolben-Einheit 31 gemessene Druck, der rasch über den bei der Eingabe 547 eingegebenen maximalen Druck steigt. Dieser Druck entspricht einer bestimmten Pressenbelastung, die gleich oder verschieden von derjenigen sein kann, bei der die Pressenspeisung unterbrochen wird, doch ist es zweckmässig, wenn diese beiden Belastungswerte wenigstens annähernd gleich sind.

Der Vergleicher 545 gibt über das UND-Glied 549 einen Impuls an den Programmspeicher 503, um den Ablauf des Programms zu unterbinden. Gleichzeitig wird dieser Impuls über das UND-Glied 551 dem Eingang 553 der Pressensteuerung 501 übertragen, damit diese Pressensteuerung 501 das Wiederanfahren der Würfelpresse verbietet. Gleichzeitig gibt die Pressensteuerung 501 die Meldung, dass die Presse geöffnet und gereinigt werden muss. Wenn die Pressform nach der Betriebs- bzw. Speisungsunterbrechung sauber geblieben ist, dann kann das Programm des Programmspeichers 503 unbehindert bis zum Erreichen des Null-Abstandes ablaufen. Nach Ablauf der Dauer des Signals am Ausgang 535 der Pressensteuerung 501 wird die Anzeige 509 des Soll-Abstandes wieder mit dem Addierer 529 verbunden, während der Programmspeicher 503 durch nicht dargestellte Mittel (z.B. über eine mit dem Ausgang 535 verbundene an einem Reset-Eingang des Speichers 503 liegende Kippstufe) in seine Ausgangslage zurückgestellt wird. In diesem Fall braucht die Presse nicht geöffnet werden.

Statt die Null- Lage von Hand über die Eingabe 511 einzugeben, ist es möglich, mit Hilfe des Programmspeichers 504 automatisch vorzugehen. Beim Schliessen des Druckknopf-Schalters 565 wird der Arbeitskontakt 523 über das ODER-Glied 537 geöffnet und die Verbindung zwischen der Anzeige 509 und dem Addierer 521 unterbrochen. Gleichzeitig leitet das UND-Glied 569 die Impulse des schnellen Taktgebers 567 dem Programmspeicher 504 zu und entsperrt dessen Ausgang zum Addierer 521. Das Programm vermindert den Abstand zwischen den Pressrollen und der Pressform. Es sind auch negative Soll-Abstände vorgesehen, für den Fall, dass die Form und die Pressrollen mehr abgenützt sind, als der im Speicher 502 gespeicherte Null-Lage entsprechen würde. Die Bewegung der Pressrollen dauert an, bis sie auf die Pressform auftreffen. Dann steigt augenblicklich der Druck beim Sensor 543 über den bei der Eingabe 547 eingegebenen maximalen Druck und der Vergleicher 545 gibt dem Programmspeicher 504 einen Impuls, der den Ablauf des Programms unterbricht und den Programmspeicher 504 zurückstellt. Gleichzeitig wird der Impuls aus dem Vergleicher 545 über das UND-Glied 571 dem Arbeitskontakt 519 zugeleitet, der kurzzeitig schliesst. Damit wird die IST- Lage der Pressrollen als Null-Lage im Speicher 502 aufgenommen. Diese automatische Messung der Null-Lage ist nicht nur nach einem Formwechsel interessant. Sie kann von Zeit zu Zeit benützt werden, um die aufgrund der zu erwartenden Abnützung berechnete Null-Lage im Speicher 502 zu kontrollieren. Damit sieht man, ob der Rhythmus bei der Einstellvorrichtung 516 richtig gewählt worden ist oder korrigiert werden muss.

In einer Variante könnte statt dem Zeitimpulsgeber 515, ein Impulsgeber verwendet werden, der in Funktion der zu verarbeitenden Produktmenge gesteuert wird. Als Mass für diese Produktmenge könnte die Summe der Wägungen vor der Presse benützt werden, oder die Summe der Umdrehungen der Zufuhrschnecke zum Pressmischer dienen. Die so erhaltenen Werte könnten noch mit einem Koeffizient multipliziert werden, um den je nach Produkt entstehenden Verschleiss pro verarbeiteter Gewichtseinheit zu berücksichtigen. Eine weitere Variante könnte darin bestehen, dass der Ausgang der Eingabestufe 516 für den Wert der Abnützung pro Betriebszeiteinheit (worunter auch die Abnützung pro produzierter Pelletmenge verstanden werden soll) statt mit dem Zeitimpuls-Geber 515 unmittelbar mit dem Lageregler 47 verbunden ist und diesem das Ausmass der pro Betriebszeiteinheit durchzuführenden Lagekorrektur der Pressrolle mitteilt. In diesem Falle kann beispielsweise das Ausgangssignal des Zeitimpuls-Gebers 515 einem Zähler eingegeben werden, der bei Erhalt einer bestimmten Anzahl von Impulsen die Lagekorrektur auslöst.

In jedem Falle aber versteht es sich, dass der Einsteller 516 - in weitestem Sinne - einen Speicher für den eingegebenen spezifischen Abnützungswert darstellt, der für ein bestimmtes zu verpressendes Rohmaterial einmal empirisch ermittelt werden kann und dann stets zur Verfügung steht. Es mag dabei zweckmässig sein, den Lageregler 47 mit einem Handeinsteller in der Weise auszubilden, dass Lagekorrekturen auch von Hand aus eingegeben werden können, beispielsweise durch wiederholtes Schliessen jeweils eines Schalters für die Bewegung der Pressrolle (vgl. 20) zur Form (vgl. 21) oder von dieser weg (der z.B. über einen Differenzierkondensator mit einem Monoflop verbunden ist, so dass pro Schalterbetätigung ein Impuls definierter Dauer erhalten wird), wobei jede Schalterbetätigung zu einer Schrittbewegung der Pressrolle in der einen oder anderen Richtung führt.

## Patentansprüche

1. Würfelpresse mit einer mit Pressbohrungen (22, 322, 422) versehener Pressform (21, 221, 321, 421) und mit wenigstens einer Pressrolle (20, 220, 320, 420), die das zwischen ihnen und der Pressform (21, 221, 321, 421) erfasste Produkt durch die Bohrungen (22, 422) hindurch presst, und mit einer stufenlos einstellbaren Verstellvorrichtung (31, 231, 331, 431) für das Einstellen des Abstandes zwischen Pressrolle (20, 220, 320, 420) und Pressform (21, 221, 321, 421), wobei die Verstellvorrichtung (31, 231, 331, 431) mit einem Lageregler (47) zur Lageregelung der Pressrolle (20, 220, 320, 420) zusammenarbeitet, dadurch gekennzeichnet, dass die Lagemessvorrichtung (38-45; 238, 239, 253, 279; 491, 492) des Lagereglers (47) als Teil der den gesamten Pressrollenhub durchführenden stufenlosen Verstellvorrichtung (31, 231, 331, 431) ausgebildet ist.

2. Würfelpresse nach Anspruch 1, dadurch gekennzeichnet, dass die Verstelleinrichtung eine fluidische, insbesondere hydraulische, Zylinder-Kolben-Einheit (31, 221, 321, 421) aufweist, die mit der Lagemessvorrichtung (38, 39, 45, 230, 270, 491, 492) für die Lage des Kolbens (40, 240, 440) relativ zum Zylinder (37, 237, 337, 437) versehen ist,

dass vorzugsweise die Lagemessvorrichtung (38, 39, 45, 230, 270, 491, 492) eine sich parallel zur Kolbenstange der Zylinder-Kolben-Einheit (31, 221, 321, 421) sich erstreckende Messstange (38; 238; 491) aufweist und/oder die Lagemessvorrichtung (38, 39, 45, 230, 270) wenigstens zum Teil innerhalb der Zylinder-Kolben-Einheit (31, 221, 321) untergebracht ist,

dass bevorzugt die Vorrichtung zur Lageregelung ein Regulierventil (55, 255) aufweist mit einer Soll-Werteingabe (50) für die Lage des Kolbens (40, 240, 440) und mit einer Rückführung (46) für den Ist-Wert der Lage des Kolbens (40, 240, 440), wobei das Regulierventil (55, 255) die Zylinder-Kolbeneinheit (31, 231, 331, 431) je nach dem Sinn des Unterschieds zwischen Ist-Wert und Soll-Wert beaufschlagt,

dass insbesondere das Regulierventil (255) am Zylinder (237) der Zylinder-Kolben-Einheit (231) angebaut ist,

dass zweckmässig für jede Pressrolle (220, 320, 420) eine Kolben-Zylinder- Einheit (231, 331, 431) vorhanden ist,

und dass gegebenenfalls die Kolben-Zylinder-Einheit (31, 231, 331) an einem Exzenterbolzen (25) zur Lagerung und Verstellung der Pressrolle (20, 220, 320) angreift.

3. Würfelpresse nach Anspruch 1 oder 2, dadurch gekennzeichnet, dass der Kolben (40, 240, 340, 440) doppeltwirkend und somit von seinen beiden Seiten her durch Druckfluid belastbar ist.

4. Würfelpresse nach Anspruch 1, 2 oder 3, dadurch gekennzeichnet, dass die Verstellvorrichtung, insbesondere die Soll-Werteingabe (50) des Regulierventils, an die Maschinenregelung (49) angeschlossen ist, wobei die Pressrollenverstellung durch wenigstens einen Parameter der Maschinenregelung, wie Motorbelastung, Würfelqualität gesteuert ist.

5. Würfelpresse nach einem der Ansprüche 1 bis 4, dadurch gekennzeichnet, dass die Verstellvorrichtung (31, 231, 431) am Pressrollenträger (23, 423), innerhalb des Arbeitsraumes der Presse angeordnet ist.

6. Würfelpresse nach einem der Ansprüche 1 bis 5, dadurch gekennzeichnet, dass die Verstellvorrichtung (331) an der Türe (381), ausserhalb des Arbeitsraumes der Presse angeordnet ist.

7. Würfelpresse nach einem der Ansprüche 1 bis 6, dadurch gekennzeichnet, dass die Verstellung der Pressrollen durch mindestens eine elektronisch gesteuerte Schraubenspindel (ws1, ws2) erfolgt.

8. Verfahren zum Betrieb einer Würfelpresse nach einem der Ansprüche 1 bis 7, wobei bei einer Überlastung des Antriebsmotors zumindest die Speisung der Presse unterbrochen wird, dadurch gekennzeichnet, dass dann die Pressrolle (20, 220, 320, 420) von der Pressform (21, 221, 231, 331) entfernt und anschliessend, allenfalls schrittweise, wieder in Richtung der Pressform verstellt wird, bis der Abstand der Pressrolle (20, 220, 320, 420) zur Pressform (21, 221, 321, 421) gleich Null ist.

9. Verfahren zum Betrieb einer Würfelpresse nach einem der Ansprüche 1 bis 8, dadurch gekennzeichnet, dass der Wert der Abnützung der Paarung Pressform (21, 221, 321, 421) - Pressrolle (20, 220, 320, 420) in Funktion der Betriebszeit und/oder der produzierten Menge in die Maschinenregelung (49) eingegeben wird, und zur Korrektur des Abstandes der Pressrolle (20, 220, 320, 420) zur Pressform (21, 221, 321, 421) dient.

10. Würfelpresse nach einem der Ansprüche 1 bis 7 zur Durchführung des Verfahrens nach Anspruch 8, dadurch gekennzeichnet, dass sie ein, insbesondere elektronisches, Programmwerk (501, 535-553), z.B. mit einem Microprozessor und/oder einer PLC-Steuerung, aufweist, dass das Programmwerk (501, 535-553) derart ausgebildet ist, dass beim Eintreffen eines Überlastungssignales an seinem Eingange die Pressrolle (20, 220, 320, 420) von der Pressform (21, 221, 231, 331) entfernt und anschliessend, allenfalls schrittweise, wieder in Richtung der Pressform verstellt wird, bis der Abstand der Pressrolle (20, 220, 320, 420) zur Pressform (21, 221, 321, 421) gleich Null ist, und dass das Programmwerk (501, 535-553) zum Auslösen dieses Programmes einen Eingang besitzt, der mit einer Überwachungsstufe (501') für Überlastung der Presse verbunden ist.

11. Würfelpresse zur Durchführung des Verfahrens nach Anspruch 9, dadurch gekennzeichnet, dass sie einen Speicher (516, 515) für die Eingabe eines der Abnützung pro Betriebszeit und/oder pro produzierter Menge aufweist, dass der Ausgang dieses Speichers (516) einem Korrekturkreis (502, 513, 521, 525, 527) für die Lage der Pressrolle (20, 220, 320, 420) zuführbar ist, an den der Lageregler (47) für die Pressrolle(n) angeschlossen ist, und dass vorzugsweise der Speicher (516) einen Einsteller (516) für die Frequenz bzw. die Impulspausenzeit eines die Abnützung angebenden Impulsgebers (515) aufweist.

12. Würfelpresse nach einem der Ansprüche 1 bis 7, 10 oder 11, dadurch gekennzeichnet, dass ein Druckaufnehmer (543) für den Pressrollendruck vorgesehen ist, dass dieser Druckaufnehmer (543) vorzugsweise an der Andruckseite der Zylinder-Kolben-Einheit zum Abfühlen des Fluiddruckes darin angeordnet ist, und dass das Ausgangssignal dieses Druckaufnehmers gegebenenfalls dem Programmwerk (501, 535-553) zur Beeinflussung bzw. Einleitung des Programmablaufes zuführbar ist.

## Claims

1. Pellet press comprising a press die (21, 221, 321, 421) provided with press bores (22, 322, 422); at least one press roller (20, 220, 320, 420) which presses the product engaged between it and the press die (21, 221, 321, 421) through the bores (22, 422); and a steplessly adjustable adjusting device (31, 231, 331, 431) for adjusting the spacing between the press roller (20, 220, 320, 420) and the press die (21, 221, 321, 421), with the adjusting device (31, 231, 331, 431) cooperating with a position regulator (47) for the positional regulation of the press roller (20, 220, 320, 420), characterised in that the position measuring device (38-45; 238, 239, 253, 279; 491, 492) of the position regulator (47) is formed as a part of the stepless adjusting device (31, 231, 331, 431) which carries out the total stroke of the press rollers.

2. Pellet press in accordance with claim 1, characterised in that the adjusting device has a fluidic, in particular hydraulic piston-in-cylinder unit (31, 221, 321, 421) which is provided with the position measuring device (38, 39, 45, 230, 270, 491, 492) for the position of the piston (40, 240, 440) relative to the cylinder (37, 237, 337, 437);

in that the position measuring device (38, 39, 45, 230, 270, 491, 492) preferably has a measurement rod (38; 238; 491) which extends parallel to the piston rod of the piston-in-cylinder unit (31, 221, 321, 421) and/or the position measuring device (38, 39, 45, 230, 270) is at least partly housed within the piston-in-cylinder unit (31, 221, 321),

in that the apparatus for the position regulation preferably has a regulating valve (55, 255) with a desired value input (50) for the position of the piston (40, 240, 440) and with a feedback (46) for the actual value of the position of the piston (40, 240, 440), with the regulating valve (55, 255) acting on the piston-in-cylinder unit (31, 231, 331, 431) in dependence on the sense of the difference between the actual value and the desired value,

in that the regulating value (255) is in particular built onto the cylinder (237) of the piston-in-cylinder unit (231);

in that a piston-in-cylinder unit (231, 331, 431) is expediently present for each press roller (220, 320, 420); and

in that the piston-in-cylinder unit (32, 231, 331) optionally acts on an eccentric pin (25) for the journalling and adjustment of the press roller (20, 220, 320).

3. Pellet press in accordance with claim 1 or claim 2, characterised in that the piston (40, 240, 340, 440) is double-acting and is thus loadable by pressure fluid from both of its sides.

4. Pellet press in accordance with claim 1, 2 or 3, characterised in that the adjusting device, in particular the desired value input (50) for the regulating valve, is connected to the machine regulation (49), with the press roller adjustment being controlled by at least one parameter of the machine regulation such as motor load, pellet quality.

5. Pellet press in accordance with one of the claims 1 to 4, characterised in that the adjusting device (31, 231, 431) is arranged on the press roll carrier (23, 423) within the working space of the press.

6. Pellet press in accordance with one of the claims 1 to 5, characterised in that the adjusting device (331) is arranged on the door (381) outside of the working space of the press.

7. Pellet press in accordance with one of the claims 1 to 6, characterised in that the adjustment of the press rollers takes place through at least one electronically controlled threaded spindle (ws1, ws2).

8. Method of operating a pellet press in accordance with one of the claims 1 to 7, wherein when the drive motor is overloaded at least the feeding of the press is interrupted, characterised in that the press roller (20, 220, 320, 420) is then removed from the press die (21, 221, 231, 331) and is subsequently adjusted again in the direction of the press die, possibly stepwise, until the spacing of the press roller (20, 220, 320, 420) from the press die (21, 221, 321, 421) is equal to zero.

9. Method of operating a pellet press in accordance with one of the claims 1 to 8, characterised in that the value of the wear of the pairing press die (21, 221, 321, 421) - press roller (20, 220, 320, 420) as a function of the operating time and/or of the produced quantity is fed into the machine regulation (49) and serves for the correction of the spacing of the press roller (20, 220, 320, 420) from the press die (21, 221, 321, 421).

10. Pellet press in accordance with one of the claims 1 to 7 for carrying out the method of claim 8, characterized in that it has a program device (501, 535-553), in particular an electronic program device, for example with a microprocessor and/or a PLC control; in that the program device (501, 535-553) is constructed such that on the arrival of an overload signal at its input the press roller (20, 220, 320, 420) is removed from the press die (21, 221, 231, 331) and is subsequently adjusted, possibly stepwise, in the direction of the press die again until the spacing of the press roller (20, 220, 320, 420) from the press die (21, 221, 321, 421) is equal to zero; and in that the program device (501, 535-553) for the initiation of this program has an input which is connected with a monitoring stage (501') for the overloading of the press.

11. Pellet press for carrying out the method of claim 9, characterised in that it has a memory (516, 515) for the feeding in of a value for the wear per operating time and/or per produced quantity; in that the output of this memory (516) can be supplied to a correction circuit (502, 513, 521, 525, 527) for the position of the press roller (20, 220, 320, 420), with the position regulator (47) for the press roller(s) being connected to the correction circuit; and in that the memory (516) preferably has an adjuster (516) for the frequency or the pulse pause time of a pulse generator (515) which specifies the wear.

12. Pellet press in accordance with one of the claims 1 to 7, 10 or 11, characterised in that a pressure transducer (543) is provided for the press roller pressure; in that this pressure transducer (543) is preferably arranged at the pressing side of the piston-in-cylinder unit to sense the fluid pressure therein; and in that the output signal of this pressure transducer can be optionally supplied to the program device (501, 535-553) for influencing or initiating the running of the program.

**Revendications**

1. Presse à granuler, avec un moule de pressage (21,221,321,421) pourvu d'orifices de pressage (22,322,422) et avec au moins un rouleau de pressage (20,220,320,420), qui pressent à travers les orifices (22,422) le produit saisi entre eux et le moule de pressage (21,221,321,421), et avec un dispositif de déplacement de réglage (31,231,331,431) réglable de façon continu, pour régler l'interstice entre le rouleau de pressage (20,220,320,420) et le moule de pressage (21,221,321,421), le dispositif de déplacement de réglage (31,231,33,431) coopérant avec un régulateur de position (47) en vue de régler la position du rouleau de pressage (20,20,320,420), caractérisé en ce que le dispositif de mesure de position (38 à 45;238,239,253,279;491,492) du régulateur de position (47) est réalisé sous forme de partie du dispositif de déplacement de réglage (21,231,331,431) à réglage continu, parcourant la totalité de la course des rouleaux de pressage.

2. Presse à granuler selon la revendication 1, caractérisée en ce que le dispositif de déplacement de réglage présente un ensemble à piston et cylindre (31,22,321,421) fluidique, en particulier hydraulique, qui est pourvu du dispositif de mesure de position (38,39,45,230,270,491,492), pour mesurer la position du piston (40,240,440) par rapport au cylindre (37,237,337,437),
de préférence le dispositif de mesure de position (38,39,45,230,270,491,492) présente une tige de mesure (38;238;491) s'étendant parallèlement à la tige de piston de l'ensemble à piston et cylindre (31,22,321,421)
et/ou
le dispositif de mesure de position (38,39,45,230,270,491,492) étant disposé au moins partiellement à l'intérieur de l'ensemble à piston et cylindre (31,22,321,421),
de préférence le dispositif de régulation de position présente une soupape de réglage (55,255), avec une entrée de valeur de consigne (50), pour la position du piston (40,240,440), et avec un retour (46) pour la valeur réelle de la position du piston (40,240,440), la soupape de réglage (55,255) sollicitant l'ensemble à piston et cylindre (31,22,321,421) selon le sens de la différence entre valeur réelle et valeur de consigne,
la soupape de réglage (255) en particulier étant montée sur le cylindre de l'ensemble à piston et cylindre (231),
un ensemble à piston et cylindre (231,321,421) étant prévu de manière appropriée pour chaque rouleau de pressage (220,320,420),
et, le cas échéant, l'ensemble à piston et cylindre (31,231,331) agissant sur un boulon d'excentrique (25) servant de palier et au déplacement de réglage du rouleau de pressage (20,220,320).

3. Presse à granuler selon la revendication 1 ou 2, caractérisée en ce que le piston (40,240,340,440) est à double action et peut ainsi être sollicité sur ses deux côtés par un fluide sous pression.

4. Presse à granuler selon la revendication 1, 2 ou 3, caractérisée en ce que le dispositif de déplacemnt de réglage, en particulier d'entrée de valeur de consigne (50) de la soupape de réglage, est raccordé à la régulation de machine (49), le déplacement de réglage des rouleaux de pressage étant commandé par au moins un paramètre de la régulation de machine, tel que la charge moteur, la qualité des granulés.

5. Presse à granuler selon l'une des revendications 1 à 4, caractérisée en ce que le dispositif de déplacement de réglage (31,231,431) est disposé sur le support de rouleaux de pressage (23,423), à l'intérieur de l'enceinte de travail de la presse.

6. Presse à granuler selon l'une des revendications 1 à 5, caractérisée en ce que le dispositif de déplacement de réglage (331) est disposé sur les portes (381), à l'extérieur de l'enceinte de travail de la presse.

7. Presse à granuler selon l'une des revendications 1 à 6, caractérisée en ce que le déplacement de réglage des rouleaux de pressage s'effectue grâce à au moins une broche filetée (ws1, ws2) à commande électronique.

8. Procédé de fonctionnement d'une presse à granuler selon l'une des revendications 1 à 7, où au moins l'alimentation de la presse est interrompue en cas de surcharge du moteur d'entraînement, caractérisé en ce que le rouleau de pressage (20,220,320,420) est ensuite éloigné du moule de pressage (21,221,231,331) et puis, pas-à-pas, à nouveau déplacé en direction du moule de pressage, jusqu'à ce que la distance entre rouleau de pressage (20,220,320,420) et moule de pressage (21,221,321,421) soit égale à zéro.

9. Procédé de fonctionnement d'une presse à granuler selon l'une des revendications 1 à 8, caractérisé en ce que la valeur de l'usure du couple moule de pressage (21,221,231,331)-rouleau de pressage (20,220,320,420) est introduite dans la régulation machine (49), en fonction du temps de fonctionnement et/ou de la quantité produite, et sert à effectuer une correction de la distance entre rouleau de pressage (20,220,320,420) et moule de pressage (21,221,321,421).

10. Presse à granuler selon l'une des revendications 1 à 7, pour mettre en oeuvre le procédé de fonctionnement selon la revendication 8, caractérisée en ce qu'elle présente un programmateur (501,535 à 553), en particulier électronique, par exemple avec un microprocesseur ou une commande à ordinateur programmable, le programmateur (501, 535 à 533) étant réalisé de telle façon que, lors de l'arrivée d'un signal de surcharge à ses entrée, le rouleau de pressage (20,220,320,420) est éloigné du moule de pressage (21,221,231,331) et ensuite, pas-à-pas, à nouveau déplacé en direction du moule de pressage, jusqu'à ce que la distance entre rouleau de pressage (20,220,320,420) et moule de pressage (21,221,321,421) soit égale à zéro, et le programmateur (501, 535 à 553) présentant, pour déclencher ce programme, une entrée qui est reliée à un étage de surveillance (501)') concernant la surcharge de la presse.

11. Presse à granuler pour mettre en oeuvre le procédé de fonctionnement selon la revendication 9, caractérisée en ce qu'elle contient une mémoire (516,515), pour introduire l'une des valeurs que sont l'usure en fonction de la durée de fonctionnement et/ou de la quantité produite, la sortie de cette mémoire (516) pouvant être envoyée à un circuit correcteur (502,513,521,525,527) de la position du rouleau de pressage (20,220,320,420), auquel est raccordé le régulateur de position (47) du ou des rouleau()x de pressage, et la mémoire (516) présentant de préférence un organe de réglage (516) pour la fréquence, respectivement la durée des pauses entre impulsions d'un émetteur d'impulsions (515) indiquant l'usure.

12. Presse à granuler selon l'une des revendications 1 à 7,10 ou 11, caractérisée en ce qu'est prévu un capteur de pression (543) pour la pression de rouleau de pressage, ce capteur de pression (543) étant de préférence disposé sur le côté d'arrivée de la pression de l'ensemble à piston et cylindre, en vue de mesurer la pression du fluide à l'intérieur, et le signal de sortie de ce capteur de pression pouvant le cas d'échéant être envoyé au programmateur (501,535 à 553), en vue d'influencer, respectivement de démarrer le déroulement du programme.

Fig: 1

Fig: 7

Fig: 2

Fig. 3A

Fig. 3 B

Fig: 4

Fig 3

Fig 5

Fig: 6

Fig.8